# FASCICULE DE BREVET EUROPEEN

(11) **EP 3 369 151 B1**
(45) Date de publication et mention de la délivrance du brevet: **19.05.2021**
(21) Numéro de dépôt: 16806239.6
(22) Date de dépôt: 28.10.2016
(51) Int. Cl.: H02H 9/02, H02J 7/14, H02J 7/00, H02H 9/04, H02M 1/44, H02M 1/00

(54) **DISPOSITIF DE CONTRÔLE ACTIF EN FONCTION D'UNE LOI, POUR UN CIRCUIT ÉLECTRIQUE À CONVERTISSEUR DC/DC ET STOCKEUR D'ÉNERGIE ÉLECTRIQUE MONTÉS EN SÉRIE**
VORRICHTUNG ZUR AKTIVEN STEUERUNG IN ABHÄNGIGKEIT EINES GESETZES FÜR EINE ELEKTRISCHE SCHALTUNG MIT EINEM GLEICHSTROM-GLEICHSTROM-WANDLER UND IN REIHE GESCHALTETES SYSTEM ZUR STROMSPEICHERUNG
DEVICE FOR ACTIVE CONTROL DEPENDING ON A LAW, FOR AN ELECTRIC CIRCUIT WITH A DC/DC CONVERTER AND ELECTRICAL ENERGY STORAGE SYSTEM MOUNTED IN SERIES

(30) Priorité: 30.10.2015 FR 1560400
(43) Date de publication de la demande: 05.09.2018
(73) Titulaire: PSA Automobiles SA, 78300 Poissy (FR)
(72) Inventeur: BOUCLY, Bernard, 78150 Le Chesnay (FR); COMTE, Raphael, 77380 Combs La Ville (FR)
(74) Mandataire: Jeannin, Laurent Jean-Pierre
(86) Numéro de dépôt international: PCT/FR2016/052813
(87) Numéro de publication internationale: WO 2017/072464

(56) Documents cités:
- EP-A1- 2 942 851
- EP-A2- 2 562 896
- WO-A1-95/07571
- WO-A1-2014/033385
- DE-A1-102011 056 270
- FR-A1- 3 001 931

## Description

L'invention concerne les circuits électriques qui comprennent un générateur de courant connecté en parallèle à un réseau d'alimentation et à un convertisseur de type DC/DC et à découpage.

Comme le sait l'homme de l'art, dans certains domaines, comme par exemple celui des véhicules (éventuellement automobiles), on utilise un circuit électrique ayant un générateur de courant, comme par exemple un alternateur, connecté en parallèle à un premier stockeur d'énergie électrique, à un réseau de consommation (comportant au moins un organe consommateur d'énergie électrique), et à un convertisseur de type DC/DC, à découpage, situé entre le premier stockeur d'énergie électrique et le réseau de consommation, et connecté en série à un second stockeur d'énergie électrique.

Dans ce type de circuit électrique, on utilise un convertisseur réversible, c'est-à-dire pouvant fonctionner dans un mode de « recharge » destiné à fournir de l'énergie électrique au stockeur d'énergie électrique auquel il est connecté en série, et dans un mode de « décharge » destiné à fournir au réseau d'alimentation de l'énergie électrique stockée dans le stockeur d'énergie électrique auquel il est connecté en série.

Lorsque ce type de convertisseur fonctionne en mode recharge, il induit des perturbations électromagnétiques dans le réseau d'alimentation, comme par exemple des surtensions, lesquelles sont néfastes pour certains organes consommateurs d'énergie électrique ou provoquent des variations de fonctionnement désagréables et/ou potentiellement dangereuses. Pour réduire ces perturbations, on équipe les convertisseurs d'un filtre passif, par exemple de type CLC (condensateur-inductance- condensateur). Hélas, ce filtre passif est volumineux, lourd et onéreux.

On connait par le document EP 2 562 896 un circuit de commande destiné à limiter indirectement un courant de charge qui s'écoule par un élément semi-conducteur commandable, ledit premier circuit de commande commandant un élément semi-conducteur commandable en considérant une puissance dissipée de l'élément semi-conducteur (31) fonction du courant de charge estimé et/ou mesuré.

On connait par le document WO 95/07571 un régulateur de courant alternatif fonctionnant au moins avec deux régions semi-conductrices. Chaque région semi-conductrice présente un donneur d'électrons, un collecteur d'électrons et l'électrode contrôlant le flux électronique. La région semi-conductrice présente également des diodes internes de substrat. Dans chaque région semi-conductrice la tension grille-source dans le sens de conduction est établie à une grandeur telle qu'il s'instaure une limitation voulue du courant. Dans la région semi-conductrice en mode inverse, la tension grille-source est réglée à une grandeur telle que la diode de substrat soit encore sans courant

On connait par le document WO 2014/033385 un circuit électrique d'un véhicule automobile comprenant un premier stockeur d'énergie électrique, un générateur de courant connecté en parallèle au premier stockeur d'énergie électrique entre un potentiel de référence et un premier nœud du circuit, un réseau de bord du véhicule comportant au moins un organe consommateur d'énergie électrique monté entre un deuxième nœud du circuit et le potentiel de référence, un dispositif de régulation en tension monté entre le premier nœud et le deuxième nœud. Le dispositif de régulation comporte un commutateur By-Pass ainsi qu'un convertisseur DC/DC réversible monté en série avec un deuxième stockeur d'énergie électrique, le convertisseur DC/DC étant connecté au deuxième noeud. Le réseau de bord comporte un module de pilotage apte à piloter le dispositif de régulation en fonction soit d'une phase de fonctionnement en récupération d'énergie soit en phase de fonctionnement en restitution d'énergie.

L'invention a donc notamment pour but d'améliorer la situation.

Elle propose à cet effet un dispositif de contrôle destiné à équiper un circuit électrique comprenant un générateur de courant connecté en parallèle à un premier stockeur d'énergie électrique, à un réseau de consommation, comportant au moins un organe consommateur d'énergie électrique, et à un convertisseur de type DC/DC, à découpage, situé entre le premier stockeur d'énergie électrique et le réseau de consommation, et connecté en série à un second stockeur d'énergie électrique.

Ce dispositif de contrôle se caractérise par le fait qu'il comprend :
- un module d'interruption propre à être monté en série entre, d'une part, le générateur de courant et le premier stockeur d'énergie électrique, et, d'autre part, le convertisseur et le réseau de consommation, et comportant au moins deux moyens d'interruption, d'une part, comprenant chacun au moins un interrupteur principal, à au moins trois états, dont au moins un état intermédiaire partiellement passant, et une diode connectés en parallèle, et, d'autre part, connectés en série avec les diodes montées de façons opposées, et
- des moyens de contrôle agencés pour contrôler le placement de l'un au moins des interrupteurs principaux dans un état intermédiaire dans un cas où le convertisseur est dans un mode de recharge du second stockeur d'énergie électrique, et où une mesure de tension aux bornes du réseau de consommation est supérieure à une consigne de limitation de tension aux bornes du réseau de consommation, et le placement des interrupteurs principaux dans des états définis par des consignes de fonctionnement externes dans tout autre cas.

On dispose ainsi d'un dispositif de contrôle de type actif, propre à réduire des perturbations électromagnétiques induites par un convertisseur DC/DC à découpage, tout en étant peu volumineux, de poids réduit et peu onéreux.

Le dispositif de contrôle selon l'invention peut comporter d'autres caractéristiques qui peuvent être prises séparément ou en combinaison, et notamment :
- ses moyens de contrôle peuvent être agencés, lorsque chaque interrupteur principal a plusieurs états intermédiaires, pour contrôler les placements de l'un au moins des interrupteurs principaux dans des états successifs fonction d'une loi prédéfinie propre à induire une diminution de la tension aux bornes du réseau de consommation tant que la mesure de tension aux bornes du réseau de consommation est supérieure à la consigne de limitation de tension aux bornes de ce réseau de consommation ;
   > la loi prédéfinie peut être non linéaire ou linéaire ;
   > ses moyens de contrôle peuvent être agencés pour débuter le contrôle selon la loi prédéfinie avec un premier décalage temporel prédéfini après la réception d'une première mesure de tension aux bornes du réseau de consommation supérieure à la consigne de limitation de tension aux bornes de ce réseau de consommation ;
   > ses moyens de contrôle peuvent être agencés pour arrêter le contrôle selon la loi prédéfinie avec un second décalage temporel fonction de la mesure de tension aux bornes du réseau de consommation ;
      - ses moyens de contrôle peuvent être agencés pour choisir le second décalage temporel en fonction d'une fréquence de découpage du convertisseur, d'un courant consommé par le convertisseur pendant le découpage, d'une mesure de tension effectuée en amont du module d'interruption, et d'au moins une caractéristique d'impédance du circuit électrique en amont du module d'interruption ;
- ses moyens de contrôle peuvent être agencés pour contrôler les placements des interrupteurs principaux en fonction également d'au moins un paramètre choisi parmi (au moins) une consigne de tension minimale aux bornes du réseau de consommation, un état en cours du circuit électrique, et une consigne de fonctionnement du dispositif de contrôle ;
- ses moyens de contrôle peuvent être agencés pour contrôler les placements des interrupteurs principaux de façon sensiblement synchronisée ou bien de façon désynchronisée.

L'invention propose également un circuit électrique propre à équiper un système et comprenant, d'une part, un générateur de courant connecté en parallèle à un premier stockeur d'énergie électrique, à un réseau de consommation, comportant au moins un organe consommateur d'énergie électrique, et à un convertisseur de type DC/DC, à découpage, situé entre le premier stockeur d'énergie électrique et le réseau de consommation, et connecté en série à un second stockeur d'énergie électrique, et, d'autre part, un dispositif de contrôle du type de celui présenté ci-avant et monté en série entre, d'une part, le générateur de courant et le premier stockeur d'énergie électrique, et, d'autre part, le convertisseur et le réseau de consommation.

L'invention propose également un véhicule, éventuellement de type automobile, et comprenant un circuit électrique du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement un exemple de réalisation de circuit électrique comprenant un dispositif de contrôle selon l'invention,
- les figures 2 à 7 illustrent schématiquement et fonctionnellement six exemples de réalisation différents d'un module d'interruption d'un dispositif de contrôle selon l'invention,
- la figure 8 illustre schématiquement un diagramme d'évolution de la résistance (R_{IP}) d'un interrupteur principal en fonction de sa commande de tension (G_{IP}),
- la figure 9 illustre schématiquement un premier diagramme d'évolution temporelle de la commande de tension (Ccv) d'un interrupteur de puissance d'un convertisseur DC/DC à découpage, et un second diagramme d'évolution temporelle de la commande de tension (C_{IP}) d'un interrupteur principal en présence de cette évolution temporelle de la commande de tension (Ccv) du convertisseur DC/DC à découpage,

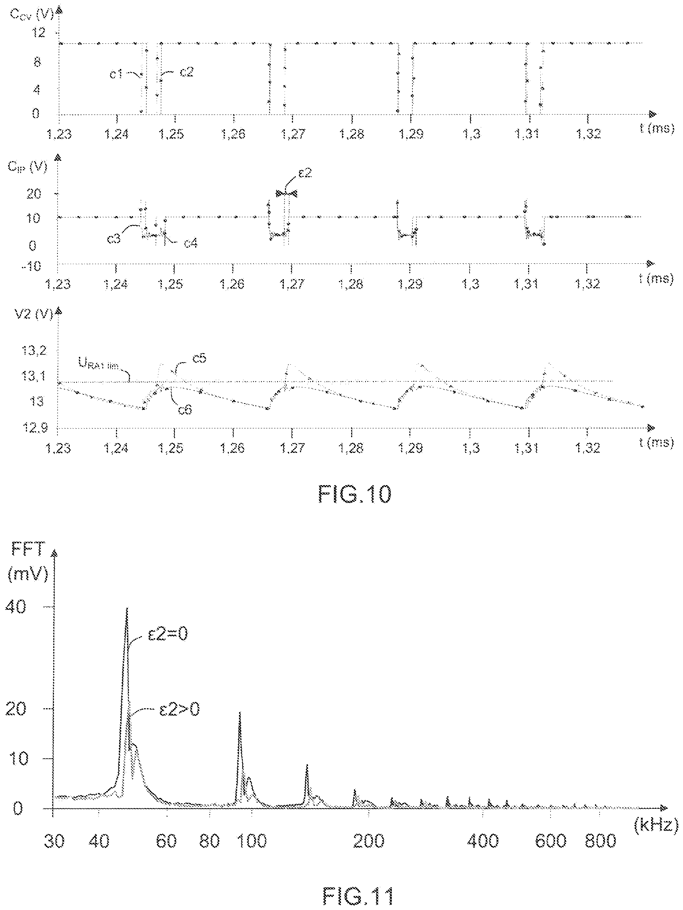

- la figure 10 illustre schématiquement un premier diagramme d'évolution temporelle de la commande de tension (Ccv) d'un interrupteur de puissance d'un convertisseur DC/DC à découpage, un deuxième diagramme d'évolutions temporelles de la commande de tension (C_{IP}) d'un interrupteur principal avec un premier décalage temporel ε1 nul et un second décalage temporel ε2 respectivement nul (C1) et non nul (C2) et en présence de cette évolution temporelle de la commande de tension (Ccv) du convertisseur DC/DC à découpage, et un troisième diagramme d'évolutions temporelles de la tension (V2) aux bornes du réseau de consommation en présence respectivement de C1 (C3) et de C2 (C4), et
- la figure 11 illustre schématiquement un diagramme d'évolutions fréquentielles de la transformée de Fourier rapide (ou FFT) de la tension (U_{RA1}) aux bornes d'un réseau de consommation faisant partie d'un circuit électrique comportant un dispositif de contrôle selon l'invention et un convertisseur DC/DC comprenant un filtre passif réduit, avec des seconds décalages temporels ε2 respectivement nul (en noir) et non nul (en gris foncé).

L'invention a notamment pour but de proposer un dispositif de contrôle DC destiné à équiper un circuit électrique CE comportant au moins un générateur de courant GC, un (premier) réseau de consommation RA1, un convertisseur CV de type DC/DC et à découpage, et des premier SE1 et second SE2 stockeurs d'énergie électrique.

Dans ce qui suit, on considère, à titre d'exemple non limitatif, que le circuit électrique CE est destiné à équiper un véhicule, éventuellement de type automobile, comme par exemple une voiture. Mais l'invention n'est pas limitée à ce type d'application. En effet le circuit électrique CE peut équiper n'importe quel type de système, et notamment les véhicules (terrestres, maritimes (ou fluviaux) et aériens), et les installations, y compris de type industriel (par exemple les systèmes de sauvegarde d'alimentation).

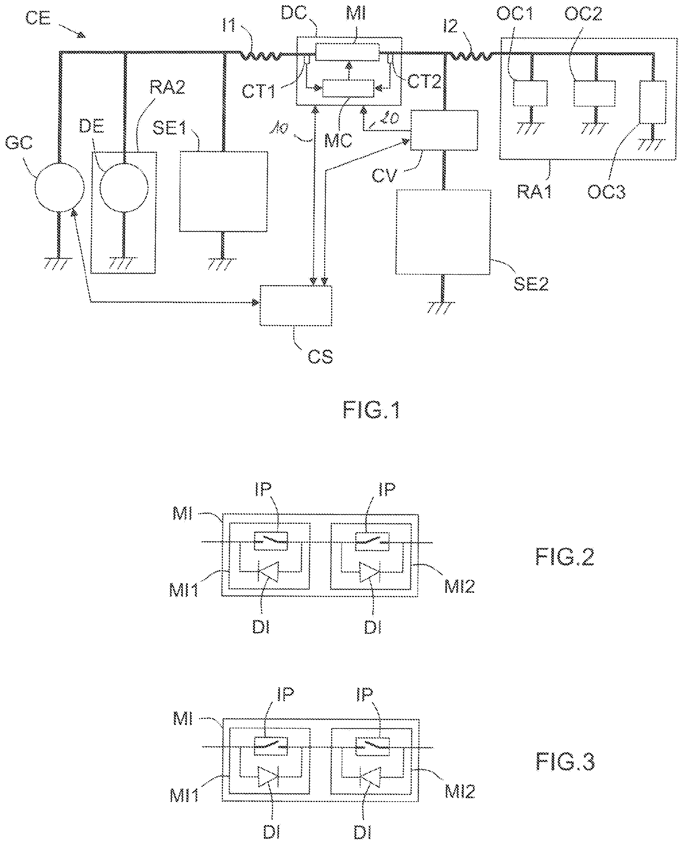

On a schématiquement représenté sur la figure 1 un exemple non limitatif de circuit électrique CE selon l'invention. Comme illustré, un tel circuit électrique CE comprend au moins un générateur de courant GC, un premier réseau de consommation RA1, un convertisseur CV, des premier SE1 et second SE2 stockeurs d'énergie électrique, et un dispositif de contrôle DC selon l'invention.

Le premier réseau de consommation RA1 comporte au moins un organe OCj consommateur d'énergie électrique. A titre d'exemple non limitatif, un organe OCj peut être un calculateur, un capteur, un combiné d'affichage, des essuie-glaces, une direction assistée électrique, un turbo compresseur électrique, des suspensions électriques, un moteur (ou machine) électrique, ou un système de gestion des arrêts/démarrages d'un moteur. On notera que dans l'exemple non limitatif illustré sur la figure 1, le premier réseau de consommation RA1 comporte trois organes OC1 à OC3 (j = 1 à 3). Mais il peut comporter n'importe quel nombre d'organes consommateurs d'énergie électrique, dès lors que ce nombre est supérieur ou égal à un (1).

Le générateur de courant GC est connecté en parallèle au premier stockeur d'énergie électrique SE1, au premier réseau de consommation RA1, et au convertisseur CV. Dans le cas d'un véhicule, il s'agit par exemple d'un alternateur ou d'un alterno-démarreur. On notera que si le générateur de courant GC est un alternateur, alors le circuit électrique CE comprend également un démarreur DE, monté en parallèle de l'alternateur GC, comme illustré non limitativement sur la figure 1.

On notera également, comme illustré non limitativement sur la figure 1, que le circuit électrique CE peut comprendre un second réseau de consommation RA2, d'une part, monté en parallèle entre le générateur de courant GC et le premier stockeur d'énergie électrique SE1, et, d'autre part, comportant au moins un organe consommateur d'énergie électrique (et notamment le démarreur DE).

Le premier stockeur d'énergie électrique SE1 est connecté en parallèle entre le générateur de courant GC et le convertisseur CV. Il s'agit, par exemple, d'une batterie principale, par exemple de type 12 V ou 24 V, chargée de fournir de l'énergie électrique au second réseau de consommation RA2 (et notamment ici au démarreur DE) ainsi qu'éventuellement au premier réseau de consommation RA1.

Le convertisseur CV est de type DC/DC (« courant continu/courant continu »), à découpage, et connecté en série au second stockeur d'énergie électrique SE2. Il est par ailleurs réversible afin de pouvoir fonctionner au moins en mode « charge », pour fournir de l'énergie électrique (par exemple produite par le générateur de courant GC) au second stockeur d'énergie électrique SE2, et en mode « décharge », pour fournir au premier réseau de consommation RA1 de l'énergie électrique stockée dans le second stockeur d'énergie électrique SE2. On notera que le convertisseur CV peut, par exemple, être de type dit « buck/boost » ou « FLYBACK » ou encore « FORWARD ». Par ailleurs, le convertisseur CV peut réaliser un découpage avec une fréquence de découpage fixe ou variable.

Le convertisseur CV comporte donc au moins un interrupteur de puissance. Lorsque le convertisseur CV prélève de la puissance, et donc est dans un mode de recharge (ou PWM), pour recharger le second stockeur d'énergie électrique SE2, le au moins un interrupteur commute entre une position ouverte et une position fermée.

Le convertisseur CV envoie, au dispositif de contrôle DC, la position (ouvert ou fermé) du au moins un interrupteur ou la commande adressé audit au moins interrupteur, par l'intermédiaire d'une liaison 20 de données numérique ou analogique.

Le premier stockeur d'énergie électrique SE1 agit notamment comme filtre du premier réseau de consommation RA1 du fait de son important effet capacitif. Il est, par exemple, de type basse ou très basse tension, selon la structure du convertisseur CV. A titre d'exemple il peut être de type 12 V ou 24 V ou encore 48 V (et plus généralement de 12 V à 500 V). Egalement à titre d'exemple, il peut comprendre plusieurs ultra-condensateurs (par exemple trois ou cinq), montés en série.

Le dispositif de contrôle DC, selon l'invention, comprend au moins un module d'interruption MI et des moyens de contrôle MC.

Le module d'interruption MI est propre à être monté en série entre le générateur de courant GC et le convertisseur CV. Ce montage en série se fait de préférence via deux inductances I1 et I2 placées en série en amont et en aval du module d'interruption MI, comme illustré non limitativement sur la figure 1. On notera que sur la figure 1 les deux inductances I1 et I2 placées en série en amont et en aval du module d'interruption MI représentent les effets inductifs des câbles électriques du circuit électrique CE, et notamment du premier réseau de consommation RA1 et de l'éventuel second réseau de consommation RA2.

Ce module d'interruption MI comporte au moins deux moyens d'interruption Mlk qui comprennent chacun au moins un interrupteur principal IP à au moins trois états et une diode DI connectés en parallèle. Ces états sont l'état OFF (ou état ouvert (ou non passant)), l'état ON (ou état fermé (ou passant)), et au moins un état intermédiaire (ou état partiellement ouvert (ou partiellement passant)).

Par ailleurs, ces moyens d'interruption Mlk sont connectés en série en ayant leurs diodes DI respectives montées de façons opposées, comme illustré dans les deux variantes de réalisation des figures 2 et 3. Le module d'interruption MI constitue ainsi une résistance variable.

Cet agencement particulier du module d'interruption MI a plusieurs explications, qui peuvent éventuellement être associées.

Une première explication réside dans le fait que les moyens d'interruption Mlk peuvent être réalisés, comme on le verra plus loin, à partir de composants MOSFET qui comprennent intrinsèquement une diode en parallèle. Par conséquent, un seul moyen d'interruption Mlk ne peut interrompre le courant que dans un seul sens en raison de la conduction de sa diode, et donc il est utile de réaliser un montage de deux moyens d'interruption Mlk en opposition pour pouvoir interrompre le courant dans les deux sens.

Une deuxième explication réside dans le fait que lorsque l'on veut décharger le second stockeur d'énergie électrique SE2 seulement dans le premier réseau de consommation RA1, il faut un interrupteur avec sa diode qui empêche le retour de courant vers le second réseau de consommation RA2 (by-pass réalisé avec le second moyen d'interruption MI2). Un seul moyen d'interruption Mlk est ouvert (ici le premier MI1), tandis que le second moyen d'interruption MI2 est forcément fermé, afin d'obtenir un gain énergétique et une amélioration du rendement. La diode DI est une contrainte : si la tension du premier réseau de consommation RA1 s'écroule, le courant passera par la diode DI le temps de fermer l'interrupteur associé.

Une troisième explication réside dans le fait que pour réaliser la fonction de filtre actif, le second moyen d'interruption MI2 ne suffit pas car il ne peut filtrer que 0,7 V au maximum en raison de la diode DI qui est montée en parallèle de l'interrupteur principal dans le second moyen d'interruption MI2. Il est donc nécessaire d'ajouter le premier moyen d'interruption MI1 (interrupteur principal IP avec sa diode DI), afin de l'utiliser en mode ouvert/fermé ou « OFF/ON ») et en mode linéaire (résistance variable) lorsque le courant circule du premier moyen d'interruption MI1 vers le second moyen d'interruption MI2.

Une quatrième explication réside dans le fait que les diodes sont en plus des contraintes de sûreté de fonctionnement.

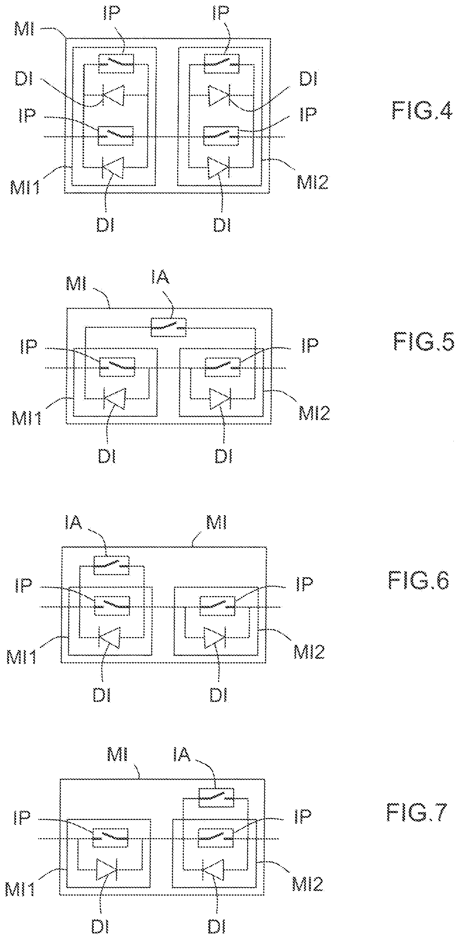

On notera, comme illustré non limitativement dans la variante de réalisation de la figure 4, que l'un au moins des moyens d'interruption Mlk peut éventuellement comprendre au moins deux paires constituées chacune d'un interrupteur principal IP et d'une diode DI, agencées de la même façon, et connectées en parallèle. Cela permet d'augmenter la capacité de coupure et de conduction de courant.

Par exemple, chaque interrupteur principal IP peut être un composant électronique de puissance de type MOSFET, et dont l'état (ouvert, fermé ou partiellement ouvert) dépend d'une commande de tension.

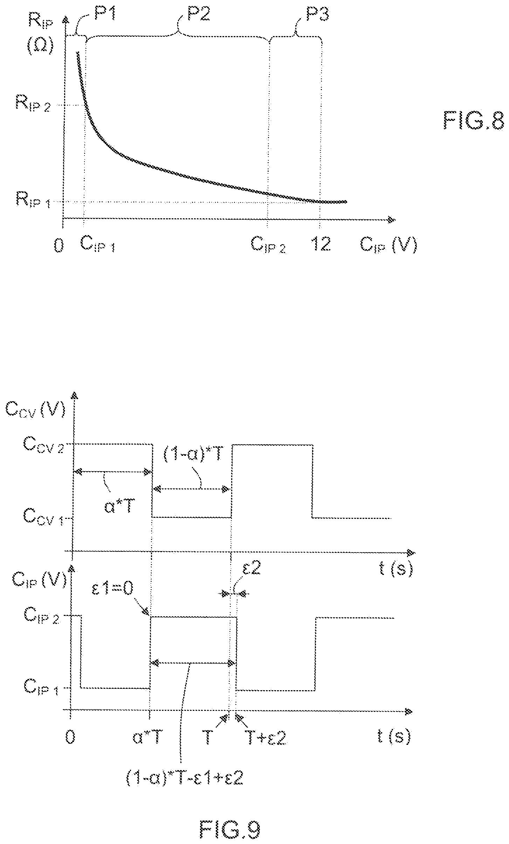

Par exemple, chaque interrupteur principal IP peut être un composant électronique de puissance de type MOSFET, et dont l'état (ouvert ou partiellement ouvert ou fermé) dépend d'une commande de tension C_{IP}, par exemple égale à 0,5 V. On a schématiquement illustré sur la figure 8 un diagramme d'exemple non limitatif d'évolution de la résistance R_{IP} d'un interrupteur principal IP de type MOSFET en fonction de sa commande de tension C_{IP}. La référence C_{IP 1} représente la commande de tension minimale d'un interrupteur principal IP (elle est ici égale à 4 V). La référence C_{IP 2} représente la commande de tension maximale d'un interrupteur principal IP (elle est ici égale à 10 V). La référence R_{IP 1} représente la résistance d'un interrupteur principal IP lorsque sa commande de tension C_{IP} est égale à C_{IP 2}. La référence R_{IP 2} représente la résistance d'un interrupteur principal IP lorsque sa commande de tension C_{IP} est égale à C_{IP 1}. La référence P1 représente la zone de commande de tension C_{IP} dans laquelle l'interrupteur principal IP est dans son état ouvert (ou non passant). La référence P2 représente la zone de commande de tension C_{IP} dans laquelle l'interrupteur principal IP est dans ses états intermédiaires (partiellement passants). Dans cette zone de commande de tension C_{IP} P2 on peut faire fonctionner l'interrupteur principal IP dans un mode dit « linéaire » afin de faire varier sa résistance de façon sensiblement linéaire. La référence P3 représente la zone de commande de tension C_{IP} dans laquelle l'interrupteur principal IP est dans son état fermé (ou passant).

On notera également, comme illustré non limitativement dans les variantes de réalisation des figures 5 à 7, que le module d'interruption MI peut éventuellement comprendre, en complément, au moins un interrupteur auxiliaire IA à deux états et monté en parallèle de l'un au moins de ses interrupteurs principaux IP. Ces états sont l'état ON (ou état fermé (ou passant)), et l'état OFF (ou état ouvert (ou non passant)).

Cette option à plusieurs intérêts. En effet, certains consommateurs du premier réseau de consommation RA1 devant être alimentés lorsque le véhicule est dans son état de veille, l'interrupteur auxiliaire IA doit être fermé lors de la veille du véhicule pour que cette alimentation puisse se faire. Par ailleurs, cela permet de pallier une éventuelle défaillance des interrupteurs principaux IP (si tous les interrupteurs principaux IP sont hors service, il n'est plus possible d'alimenter le premier réseau de consommation RA1 et donc il faut un interrupteur auxiliaire IA de secours).

Dans la variante de réalisation de la figure 5, un interrupteur auxiliaire IA est monté en parallèle avec les deux moyens d'interruption Mlk. Dans la variante de réalisation de la figure 6, un interrupteur auxiliaire IA est monté en parallèle avec le seul premier moyen d'interruption MI1. Dans la variante de réalisation de la figure 7, un interrupteur auxiliaire IA est monté en parallèle avec le seul second moyen d'interruption MI2. L'interrupteur auxiliaire IA permet de faire passer un courant de faible intensité lorsque les deux moyens d'interruption Mlk sont ouverts, par exemple lorsque le convertisseur CV est dans un mode repos.

L'exemple de la figure 5 permet de couvrir toutes les défaillances, car il permet de « shunter » les deux moyens d'interruption Mlk au moyen de l'interrupteur auxiliaire IA.

Dans les exemples des figures 6 et 7, on ne court-circuite que le moyen d'interruption Mlk qui empêche une circulation du courant. En effet, si un interrupteur principal IP est ouvert, la cathode de la diode DI associée est connectée du côté du stockeur d'énergie.

De préférence, chaque interrupteur auxiliaire IA est par défaut placé dans un état fermé (ou passant), afin de faire passer un courant de veille dans le premier réseau de consommation RA1 dans le mode veille (ou repos). Ainsi, dès que l'interrupteur auxiliaire IA n'est plus alimenté, il se ferme et permet d'alimenter le premier réseau de consommation RA1. De plus, lorsque le véhicule est en veille, un interrupteur normalement fermé ne consomme pas de courant (et donc n'induit pas de décharge d'un stockeur).

Par ailleurs, chaque interrupteur auxiliaire IA peut être un relais électromécanique.

Les moyens de contrôle MC sont agencés pour contrôler le placement de l'un au moins des interrupteurs principaux IP dans un état intermédiaire (partiellement passant) dans un cas où le convertisseur CV prélève de la puissance, et donc est dans un mode de recharge (ou PWM), pour recharger le second stockeur d'énergie électrique SE2, et où une mesure de tension V2 aux bornes du premier réseau de consommation RA1 est supérieure à une consigne U_{RA1 lim} de limitation de tension aux bornes de ce premier réseau de consommation RA1.

Dans tout autre cas ne correspondant pas au cas précédent, les moyens de contrôle MC sont agencés pour contrôler le placement des interrupteurs principaux IP dans des états qui sont définis par des consignes de fonctionnement externes. Ainsi, si la mesure de tension V2 aux bornes du premier réseau de consommation RA1 est inférieure à la consigne U_{RA1 lim}, les interrupteurs principaux IP sont placés dans l'état ON (ou totalement passant).

Ce contrôle des états du module d'interruption MI permet de faire varier la résistance variable de ce dernier (MI) pendant les instants de découpage du convertisseur CV, c'est-à-dire lorsque ce dernier (CV) prélève de la puissance sur le générateur de courant GC, et donc permet de réduire les variations de tension et par conséquent les perturbations électromagnétiques induites par le convertisseur CV lorsqu'il fonctionne. Ce contrôle des états se fait au moyen de commandes C_{IP} (de tension dans le cas de MOSFETs) déterminées par les moyens de contrôle MC en fonction de paramètres choisis afin de tenir compte des contraintes de dynamique et de temps de réponse et ainsi garantir les performances désirées.

On notera que les moyens de contrôle MC peuvent assurer leur contrôle en analogique (au moyen de composants électroniques) ou en numérique (au moyen, par exemple, d'un microcontrôleur).

Les consignes de fonctionnement externes des différents interrupteurs principaux IP sont fournies par un calculateur de supervision CS qui est chargé de superviser le fonctionnement du système (ici un véhicule), et en particulier de son circuit électrique CE.

Le mode de recharge du convertisseur CV est une information dite de transfert du convertisseur CV qui peut être fournie par le calculateur de supervision CS. Lorsque le convertisseur CV est en mode de recharge, il faut que la tension V2 aux bornes du premier réseau de consommation RA1 soit supérieure à la consigne U_{RA1 min} de tension minimale aux bornes de ce premier réseau de consommation RA1, mais sans pour autant être supérieure à la consigne U_{RA1 lim} de limitation de tension aux bornes de ce premier réseau de consommation RA1. Par conséquent, si V2 est inférieure à U_{RA1 min}, le dispositif de contrôle DC n'a pas besoin de fonctionner, mais si V2 est supérieure à U_{RA1 lim} (il y a une surtension) et le dispositif de contrôle DC doit fonctionner afin que son module d'interruption MI se comporte comme une résistance variable sur une période de temps très courte pour limiter autant que possible cette surtension en provoquant une chute de tension entre la tension V1 en amont du module d'interruption MI et la tension V2 (en aval de ce dernier (MI)).

Le mode de recharge du convertisseur CV peut être fournie par le calculateur de supervision CS au dispositif de contrôle DC par l'intermédiaire d'une liaison 10 de données numérique ou analogique.

A titre d'exemple non limitatif U_{RA1 lim} peut être choisie égale à 13,1 V. En variante, elle peut être choisie égale à 14 V ou 15 V, cela dépendant par exemple de la tension aux bornes du générateur de courant GC.

La tension V1 est mesurée par un capteur de tension CT1 en amont du module d'interruption MI et en aval de l'ensemble comprenant le générateur de courant GC et le premier stockeur d'énergie électrique SE1 et l'éventuel second réseau de consommation RA2. Dans l'exemple illustré non limitativement sur la figure 1, le capteur de tension CT1 fait partie du dispositif de contrôle DC. Mais cela n'est pas obligatoire. Il pourrait en effet être externe au dispositif de contrôle DC et chargé de fournir des mesures de tension à un autre équipement du système (ici un véhicule). Cette externalisation n'est cependant pas optimale car elle augmente le temps de réponse et nécessite des interfaces avec l'extérieur.

La tension V2 aux bornes du premier réseau de consommation RA1 est mesurée par un capteur de tension CT2 en aval du module d'interruption MI. Dans l'exemple illustré non limitativement sur la figure 1, le capteur de tension CT2 fait partie du dispositif de contrôle DC. Mais cela n'est pas obligatoire. Il pourrait en effet être externe au dispositif de contrôle DC et chargé de fournir des mesures de tension à un autre équipement du système (ici un véhicule). Cette externalisation n'est cependant pas optimale car elle augmente le temps de réponse et nécessite des interfaces avec l'extérieur.

D'une manière générale, le convertisseur CV peut fournir sa consigne de fonctionnement et son état de fonctionnement. Cette consigne de fonctionnement est, par exemple, la commande dite « à modulation de largeur d'impulsion » (ou PWM (pour « Pulse Width Modulation »)). Elle est notamment utilisée par les moyens de contrôle MC pour déterminer les bonnes consignes à fournir au module d'interruption MI et les phases pendant lesquelles le dispositif de contrôle DC est actif.

On a schématiquement illustré sur la figure 9, dans la partie supérieure, un premier diagramme d'évolution temporelle de la commande de fonctionnement Ccv (ici une commande de tension) de l'interrupteur de puissance d'un convertisseur DC/DC à découpage. La référence T représente la période de commutation (ou de découpage) qui est l'inverse de la fréquence de découpage du convertisseur CV (laquelle peut être fixe ou variable selon le type de la régulation effectuée par ce dernier (CV)). Comme illustré, pendant une période T, l'interrupteur de puissance du convertisseur CV est placé pendant α*T dans un état fermé (ou « ON ») par la commande de fonctionnement C_{CV 2} (dite « à 1 »), puis placé pendant (1-α)*T dans un état ouvert (ou « OFF ») par la commande de fonctionnement C_{CV 1} (dite à 0). La référence α représente le rapport cyclique entre la durée du placement dans l'état ouvert et la durée du placement dans l'état fermé. On notera que le rapport cyclique α peut être fixe ou variable selon le type de la régulation effectuée par le convertisseur CV.

Lorsque le découpage (ou la commutation) est de type dit « à modulation de largeur d'impulsion » (ou PWM (pour « Puise Width Modulation »)), la commande de fonctionnement à 0 est notée « PWM=0 » et la commande de fonctionnement à 1 est notée « PWM=1 ». On notera que lorsque la commande de fonctionnement est à 1 (PWM=1), le convertisseur CV prélève de la puissance sur l'ensemble comprenant le générateur de courant GC et le premier stockeur d'énergie électrique SE1, et donc il y a du courant qui passe dans les interrupteurs principaux IP en vue d'alimenter le premier réseau de consommation RA1 et le convertisseur CV).

La consigne U_{RA1 lim} de limitation de tension aux bornes du premier réseau de consommation RA1 est une information qui peut être fournie par le calculateur de supervision CS.

On notera que lorsque le module d'interruption MI comprend au moins un interrupteur auxiliaire IA, les moyens de contrôle MC sont agencés pour contrôler l'état de cet (chaque) interrupteur auxiliaire IA en fonction au moins d'une consigne de fonctionnement d'interrupteur auxiliaire IA. Cette (chaque) consigne de fonctionnement d'interrupteur auxiliaire IA est fournie par le calculateur de supervision CS.

On notera également que lorsque chaque interrupteur principal IP a plusieurs états intermédiaires (comme c'est le cas de ceux de type MOSFET (voir figure 8)), les moyens de contrôle MC peuvent être avantageusement agencés pour contrôler les placements de l'un au moins des interrupteurs principaux IP dans des états successifs qui sont fonction d'une loi prédéfinie. Cette loi prédéfinie est propre à induire une diminution de la tension V2 aux bornes du premier réseau de consommation RA1 tant que la mesure de tension V2 aux bornes de ce premier réseau de consommation RA1 est supérieure à la consigne U_{RA1 lim} de limitation de tension aux bornes du premier réseau de consommation RA1.

Par exemple, cette loi prédéfinie peut être non linéaire. Mais dans une variante de réalisation cette loi prédéfinie pourrait être linéaire.

Pendant le contrôle selon la loi prédéfinie (par exemple non linéaire), la commande de fonctionnement C_{IP} de chaque interrupteur principal IP varie entre C_{IP 1} et C_{IP 2}, de façon à induire une chute de la tension V2 aux bornes du premier réseau de consommation RA1 sous ou au niveau de la consigne U_{RA1 lim} de limitation de tension aux bornes de ce premier réseau de consommation RA1.

On notera que les moyens de contrôle MC peuvent être agencés pour contrôler les placements des interrupteurs principaux IP de façon sensiblement synchronisée ou bien de façon désynchronisée.

On notera également que les moyens de contrôle MC peuvent être agencés pour débuter le contrôle selon la loi prédéfinie avec un premier décalage temporel prédéfini ε1 après la réception d'une première mesure de tension V2 aux bornes du premier réseau de consommation RA1 supérieure à la consigne U_{RA1 lim} de limitation de tension aux bornes de ce premier réseau de consommation RA1. Cette option est destinée à retarder de ε1 le démarrage du contrôle selon la loi prédéfinie, afin d'éviter des perturbations. Physiquement cette valeur mesurée V2 sera différente de 0, car elle est liée à la chaîne d'acquisition et de traitement. Dans ce cas, le démarrage du contrôle selon la loi prédéfinie commence au plus tard à l'instant t = α.T + ε1. Le premier décalage temporel prédéfini ε1 n'intervient qu'au démarrage du contrôle.

Par exemple, ε1 peut être choisie égale à zéro (0) par défaut.

On notera également que les moyens de contrôle MC peuvent être agencés pour arrêter le contrôle selon la loi prédéfinie avec un second décalage temporel ε2 fonction de la mesure de tension V2 aux bornes du réseau de consommation RA1. Ce second décalage temporel ε2 est un retard temporel qui est la conséquence d'une demande de maintien de l'usage en mode linéaire des deux moyens d'interruption Mlk. Cette option est destinée à retarder de ε2 l'arrêt du contrôle selon la loi prédéfinie, afin d'atténuer l'effet inductif de l'architecture électrique et du générateur de courant GC par une réduction des pics de surtension et donc une réduction des perturbations électromagnétiques.

En présence du second décalage temporel choisi ε2, l'arrêt du contrôle selon la loi prédéfinie commence au plus tard à l'instant t = T + ε2 (comme illustré dans le second diagramme de la figure 9). On notera qu'ε2 peut être éventuellement choisie égale à zéro (0).

En présence des premier ε1 et second ε2 décalages temporels choisis, la durée maximale du contrôle selon la loi prédéfinie est égale à (1-α)*T - ε1 + ε2.

Par exemple, les moyens de contrôle MC peuvent être agencés pour choisir le second décalage temporel ε2 en fonction, par exemple, de la fréquence de découpage du convertisseur CV (égale à 1/T), d'un courant I_{CV} consommé par le convertisseur CV pendant le découpage, de la mesure de tension V1 effectuée en amont du module d'interruption MI, et d'au moins une caractéristique d'impédance du circuit électrique CE en amont du module d'interruption MI. On notera que plus la valeur du courant consommé I_{CV} est élevée et plus la surtension sera élevée.

La valeur du courant I_{CV} consommé par le convertisseur CV pendant le découpage peut, par exemple, être fournie par le convertisseur CV, pour une question de performance. On notera que le calculateur de supervision CS peut donner la consigne de courant maximum autorisé pour la recharge. Par ailleurs, chaque caractéristique d'impédance du circuit électrique CE en amont du module d'interruption MI peut, par exemple, être fournie par le calculateur de supervision CS.

On notera également que les moyens de contrôle MC peuvent être agencés pour contrôler les placements des interrupteurs principaux IP en fonction également d'au moins un paramètre choisi parmi au moins la consigne U_{RA1 min} de tension minimale aux bornes du premier réseau de consommation RA1, un état en cours du circuit électrique CE, et une consigne de fonctionnement du dispositif de contrôle DC.

La consigne U_{RA1 min} de tension minimale aux bornes du premier réseau de consommation RA1 est fournie par le calculateur de supervision CS. A titre d'exemple non limitatif U_{RA1 min} peut être choisie égale à 12 V.

L'état en cours du circuit électrique CE est fourni par le calculateur de supervision CS. Il sert à réveiller / mettre en veille le dispositif de contrôle DC, et dépend du type d'alimentation utilisé.

Lorsque les moyens de contrôle MC disposent de tous les paramètres mentionnés précédemment, et que le module d'interruption MI ne comprend que deux interrupteurs principaux IP et un interrupteur auxiliaire IA, ils peuvent déterminer les commandes de tension C_{IP} en mettant en œuvre un algorithme du type de celui décrit ci-dessous, à titre d'exemple non limitatif.

Dans une première étape de l'algorithme, les moyens de contrôle MC peuvent déterminer si leur dispositif de contrôle DC a été activé. Pour ce faire, ils analysent la consigne de fonctionnement du dispositif de contrôle DC. Si l'activation a été décidée par le calculateur de supervision CS, les moyens de contrôle MC effectuent une deuxième étape. Dans le cas contraire, les moyens de contrôle MC effectuent une huitième étape dans laquelle ils génèrent :
- pour le premier interrupteur principal IP du premier moyen d'interruption MI1 une commande de tension C_{IP} égale à la consigne de fonctionnement CF1 de ce premier interrupteur principal IP, fournie par le calculateur de supervision CS,
- pour le second interrupteur principal IP du second moyen d'interruption MI2 une commande de tension C_{IP} égale à la consigne de fonctionnement CF2 de ce second interrupteur principal IP, fournie par le calculateur de supervision CS, et
- pour l'interrupteur auxiliaire IA, une commande de tension C_{IA} égale à la consigne de fonctionnement CF3 de cet interrupteur auxiliaire IA, fournie par le calculateur de supervision CS.

Dans la deuxième étape de l'algorithme, les moyens de contrôle MC peuvent déterminer si le convertisseur CV est en mode de recharge. L'objectif est en effet de réduire les perturbations électromagnétiques lorsque l'alimentation à découpage prélève de la puissance. Pour ce faire, ils analysent l'information de transfert du convertisseur CV, fournie par le calculateur de supervision CS. Si le convertisseur CV est en mode de recharge, les moyens de contrôle MC effectuent une troisième étape. Dans le cas contraire, les moyens de contrôle MC effectuent la huitième étape.

Dans la troisième étape de l'algorithme, les moyens de contrôle MC peuvent déterminer si le convertisseur CV est en limitation de courant de recharge. Pour ce faire, ils analysent la consigne de fonctionnement du convertisseur CV, fournie par ce dernier (CV). Si le convertisseur CV est en limitation de courant de recharge, les moyens de contrôle MC effectuent une quatrième étape. Dans le cas contraire, les moyens de contrôle MC effectuent la huitième étape.

Dans la quatrième étape de l'algorithme, les moyens de contrôle MC peuvent déterminer si le convertisseur CV est placé dans un état fermé (ou ON). Pour ce faire, ils analysent la commande de fonctionnement Ccv. Si cette dernière est à zéro (ou PWM=0), les moyens de contrôle MC effectuent une cinquième étape. Dans le cas contraire, les moyens de contrôle MC effectuent la huitième étape.

Dans la cinquième étape de l'algorithme, les moyens de contrôle MC peuvent déterminer si la tension V2 aux bornes du premier réseau de consommation RA1 est supérieure à la consigne U_{RA1 min} de tension minimale aux bornes de ce premier réseau de consommation RA1. Si V2 > U_{RA1 min}, les moyens de contrôle MC effectuent une sixième étape. Dans le cas contraire, les moyens de contrôle MC effectuent la huitième étape.

Dans la sixième étape de l'algorithme, les moyens de contrôle MC peuvent déterminer si la tension V2 aux bornes du premier réseau de consommation RA1 est supérieure à la consigne U_{RA1 lim} de limitation de tension aux bornes de ce premier réseau de consommation RA1. Si V2 > U_{RA1 lim}, il y a une surtension et le module d'interruption MI doit se comporter comme une résistance variable sur une période de temps très courte pour limiter autant que possible cette surtension en provoquant une chute de tension entre les tensions V1 et V2. Pour ce faire, les moyens de contrôle MC doivent effectuer une septième étape. Dans le cas contraire (V2 ≤ U_{RA1 lim}), les moyens de contrôle MC effectuent la huitième étape.

Dans la septième étape de l'algorithme, les moyens de contrôle MC contrôlent chaque interrupteur principal IP selon la loi prédéfinie (par exemple non linéaire) au moyen de commandes de tension C_{IP}. Plus précisément, la commande de tension C_{IP} de chaque interrupteur principal IP varie entre C_{IP 1} et C_{IP 2}, de façon à induire une chute de la tension V2 aux bornes du premier réseau de consommation RA1 sous ou au niveau de la consigne U_{RA1 lim} de limitation de tension aux bornes de ce premier réseau de consommation RA1. De plus, la commande de tension C_{IA} de l'interrupteur auxiliaire IA est égale à la consigne de fonctionnement CF3 de cet interrupteur auxiliaire IA, fournie par le calculateur de supervision CS.

On a schématiquement représenté sur la figure 10 au sein de trois diagrammes des résultats de simulations temporelles destinées à illustrer sous la forme d'un exemple des avantages procurés par le dispositif de contrôle DC. Le premier diagramme illustre un exemple d'évolution temporelle de la commande de tension Ccv d'un interrupteur de puissance du convertisseur CV dans un circuit électrique CE du type de celui illustré sur la figure 1. Le deuxième diagramme illustre deux exemples d'évolution temporelle de la commande de tension C_{IP} d'un interrupteur principal IP du dispositif de contrôle DC du circuit électrique CE lorsque l'on utilise un premier décalage temporel ε1 nul et des seconds décalages temporels ε2 respectivement nul (courbe C1) et non nul (courbe C2) et en présence de l'exemple d'évolution temporelle de la commande de tension Ccv du premier diagramme. Le troisième diagramme illustre des exemples d'évolution temporelle de la tension V2 mesurée aux bornes du premier réseau de consommation RA1 en présence respectivement des exemples de courbe C1 (courbe C3) et de courbe C2 (courbe C4).

On notera que dans l'exemple illustré sur les diagrammes de la figure 10 le convertisseur CV comprend avantageusement un filtre passif réduit, car cela permet de réduire encore plus les perturbations électromagnétiques pendant le découpage. On entend ici par « filtre passif réduit » un filtre passif de faible poids, faible volume et faible coût du fait de ses caractéristiques physiques. Par exemple il s'agit d'un filtre de type CLC (100µF, 100 nH, 100µF).

Lorsque l'on utilise des premier ε1 et second ε2 décalages temporels nuls (voir courbe C3), on obtient une réduction d'un facteur égal à environ 2 de l'amplitude des perturbations électromagnétiques (ici des pics de surtension) induites dans un même circuit électrique CE en présence d'un filtre passif utilisé dans l'art antérieur et donc non réduit (par exemple de type CLC (3mF, 200 nH, 3mF)). Ainsi, l'amplitude des pics de surtension peut être réduite à environ 40 mV.

Lorsque l'on utilise un premier décalage temporel ε1 nul et un second décalage temporel ε2 non nul (voir courbe C4), on obtient une réduction d'un facteur égal à environ 2 de l'amplitude des perturbations électromagnétiques (ici des pics de surtension) induites dans le circuit électrique CE en présence des premier ε1 et second ε2 décalages temporels nuls. Ainsi, l'amplitude des pics de surtension peut être réduite à environ 20 mV, comme cela apparaît sur le diagramme de la figure 11 qui illustre des évolutions fréquentielles de la transformée de Fourier rapide (ou FFT) de la tension U_{RA1} aux bornes du premier réseau de consommation RA1 lorsque les seconds décalages temporels ε2 sont respectivement nul (en noir) et non nul (en gris foncé).

## Revendications

1. Dispositif de contrôle (DC) pour un circuit électrique (CE) comprenant un générateur de courant (GC) connecté en parallèle, respectivement, à un premier stockeur d'énergie électrique (SE1), à un réseau de consommation (RA1), et à un convertisseur (CV) de type DC/DC à découpage, le convertisseur étant situé entre ledit premier stockeur d'énergie électrique (SE1) et ledit réseau de consommation (RA1) et étant connecté en série à un second stockeur d'énergie électrique (SE2), **caractérisé en ce qu'**il comprend :
i) un module d'interruption (MI) propre à être monté en série entre, d'un côté, ledit générateur de courant (GC) et ledit premier stockeur d'énergie électrique (SE1), et, d'un autre côté, ledit convertisseur (CV) et ledit réseau de consommation (RA1), et comportant au moins deux moyens d'interruption (Mlk), d'une part, comprenant chacun au moins un interrupteur principal (IP) à au moins trois états, dont au moins un état intermédiaire partiellement passant, et une diode (DI) connectés en parallèle, et, d'autre part, connectés en série avec lesdites diodes (DI) montées de façons opposées, et
ii) des moyens de contrôle (MC) agencés pour contrôler le placement de l'un au moins desdits interrupteurs principaux (IP) dans un état intermédiaire dans un cas où ledit convertisseur (CV) est dans un mode de recharge dudit second stockeur d'énergie électrique (SE2), et où une mesure de tension V2 aux bornes dudit réseau de consommation (RA1) est supérieure à une consigne de limitation de tension aux bornes dudit réseau de consommation (RA1), une commande des tensions des desdits interrupteurs principaux (IP) étant déterminée en fonction d'une commande d'au moins un interrupteur de puissance du convertisseur (CV),
et **en ce que** lesdits moyens de contrôle (MC) sont agencés, lorsque chaque interrupteur principal (IP) a plusieurs états intermédiaires, pour contrôler les placements de l'un au moins desdits interrupteurs principaux (IP) dans des états successifs fonction d'une loi prédéfinie propre à induire une diminution de la tension V2 aux bornes dudit réseau de consommation (RA1) tant que ladite mesure de tension V2 aux bornes dudit réseau de consommation (RA1) est supérieure à ladite consigne de limitation de tension aux bornes dudit réseau de consommation (RA1).

2. Dispositif selon la revendication 1, **caractérisé en ce que** ladite loi prédéfinie est non linéaire.

3. Dispositif selon l'une des revendications précédentes, **caractérisé en ce que** lesdits moyens de contrôle (MC) sont agencés pour débuter le contrôle selon ladite loi prédéfinie avec un premier décalage temporel prédéfini après la réception d'une première mesure de tension aux bornes dudit réseau de consommation (RA1) supérieure à ladite consigne de limitation de tension aux bornes dudit réseau de consommation (RA1).

4. Dispositif selon l'une des revendications précédentes, **caractérisé en ce que** lesdits moyens de contrôle (MC) sont agencés pour arrêter le contrôle selon ladite loi prédéfinie avec un second décalage temporel fonction de ladite mesure de tension aux bornes dudit réseau de consommation (RA1).

5. Dispositif selon la revendication précédente, **caractérisé en ce que** lesdits moyens de contrôle (MC) sont agencés pour choisir ledit second décalage temporel en fonction d'une fréquence de découpage dudit convertisseur (CV), d'un courant consommé par ledit convertisseur (CV) pendant ledit découpage, d'une mesure de tension effectuée en amont dudit module d'interruption (MI), et d'au moins une caractéristique d'impédance dudit circuit électrique (CE) en amont dudit module d'interruption (MI).

6. Dispositif selon l'une des revendications précédentes, **caractérisé en ce que** lesdits moyens de contrôle (MC) sont agencés pour contrôler les placements desdits interrupteurs principaux (IP) en fonction également d'au moins un paramètre choisi dans un groupe comprenant une consigne de tension minimale aux bornes dudit réseau de consommation (RA1), un état en cours dudit circuit électrique (CE), et une consigne de fonctionnement dudit dispositif de contrôle (DC).

7. Dispositif selon l'une des revendications précédentes, **caractérisé en ce que** lesdits moyens de contrôle (MC) sont agencés pour contrôler les placements desdits interrupteurs principaux (IP) de façon sensiblement synchronisée ou bien de façon désynchronisée.

8. Circuit électrique (CE) propre à équiper un système et comprenant un générateur de courant (GC) connecté en parallèle, respectivement, à un premier stockeur d'énergie électrique (SE1), à un réseau de consommation (RA1) comportant au moins un organe (OCj) consommateur d'énergie électrique, et à un convertisseur (CV) de type DC/DC à découpage, le convertisseur étant situé entre ledit premier stockeur d'énergie électrique (SE1) et ledit réseau de consommation (RA1 ) et étant connecté en série à un second stockeur d'énergie électrique (SE2), **caractérisé en ce qu'**il comprend en outre un dispositif de contrôle (DC) selon l'une des revendications précédentes, monté en série entre, d'un côté, ledit générateur de courant (GC) et ledit premier stockeur d'énergie électrique (SE1), et, d'un autre côté, ledit convertisseur (CV) et ledit réseau de consommation (RA1).

9. Véhicule, **caractérisé en ce qu'**il comprend un circuit électrique (CE) selon la revendication précédente.

## Patentansprüche

1. Steuervorrichtung (DC) für einen Stromkreis (CE) mit einem Stromgenerator (GC), der parallel zu einem ersten elektrischen Energiespeicher (SE1), zu einem Verbrauchsnetz (RA1) bzw. zu einem Wandler (CV) vom Typ DC/DC-Schalter geschaltet ist, wobei der Wandler zwischen dem ersten elektrischen Energiespeicher (SE1) und dem Verbrauchsnetz (RA1) angeordnet ist und in Reihe zu einem zweiten elektrischen Energiespeicher (SE2) geschaltet ist, **dadurch gekennzeichnet, dass** sie umfasst:
i) ein Unterbrechungsmodul (MI), das geeignet ist, in Reihe zwischen einerseits dem Stromgenerator (GC) und dem ersten elektrischen Energiespeicher (SE1) und andererseits dem Umrichter (CV) und dem Verbrauchsnetz (RA1) geschaltet zu werden, und das mindestens zwei Unterbrechungsmittel (MIk) umfasst einerseits jeweils mindestens einen Hauptschalter (IP) mit mindestens drei Zuständen, von denen mindestens ein Zwischenzustand teilweise leitend ist, und eine parallel geschaltete Diode (DI) umfasst, und andererseits mit den genannten Dioden (DI) in Reihe geschaltet ist, die in entgegengesetzter Weise angeschlossen sind, und
ii) Steuermittel (MC), die so angeordnet sind, dass sie die Platzierung von mindestens einem der Hauptschalter (IP) in einem Zwischenzustand in einem Fall steuern, in dem sich der Wandler (CV) in einem Wiederauflademodus der zweiten elektrischen Energiespeichereinrichtung (SE2) befindet und wenn eine Spannungsmessung V2 an den Klemmen des Verbrauchernetzes (RA1) größer ist als ein Spannungsbegrenzungssollwert an den Klemmen des Verbrauchernetzes (RA1), wird eine Steuerung der Spannungen der Hauptschalter (IP) in Abhängigkeit von einer Steuerung mindestens eines Leistungsschalters des Umrichters (CV) bestimmt
und dass die Steuermittel (MC) so angeordnet sind, dass sie, wenn jeder Hauptschalter (IP) mehrere Zwischenzustände hat, die Platzierungen von mindestens einem der Hauptschalter (IP) in aufeinanderfolgenden Zuständen in Abhängigkeit von einem vordefinierten Gesetz steuern, das geeignet ist, eine Abnahme der Spannung V2 über dem Verbrauchsnetz (RA1) zu induzieren, solange die Spannungsmessung V2 über dem Verbrauchsnetz (RA1) größer ist als der Spannungsbegrenzungssollwert über dem Verbrauchsnetz (RA1).

2. Vorrichtung nach Anspruch 1, **dadurch gekennzeichnet, dass** das vordefinierte Gesetz nichtlinear ist.

3. Vorrichtung nach einem der vorhergehenden Ansprüche, **dadurch gekennzeichnet, dass** die Steuermittel (MC) so angeordnet sind, dass sie die Steuerung gemäß dem vordefinierten Gesetz mit einer ersten vordefinierten Zeitverschiebung nach dem Empfang einer ersten Spannungsmessung an den Klemmen des Verbrauchernetzes (RA1), die höher als der Spannungsbegrenzungssollwert an den Klemmen des Verbrauchernetzes (RA1) ist, starten.

4. Vorrichtung nach einem der vorhergehenden Ansprüche, **dadurch gekennzeichnet, dass** die Steuermittel (MC) so angeordnet sind, dass sie die Steuerung gemäß dem vordefinierten Gesetz mit einer zweiten Zeitverschiebung in Abhängigkeit von der Spannungsmessung an den Klemmen des Verbrauchernetzes (RA1) beenden.

5. Vorrichtung nach dem vorhergehenden Anspruch, **dadurch gekennzeichnet, dass** die Steuermittel (MC) so beschaffen sind, dass sie die zweite Zeitverschiebung in Abhängigkeit von einer Schaltfrequenz des Umrichters (CV), von einem von dem Umrichter (CV) während des Schaltens verbrauchten Strom, von einer stromaufwärts des Unterbrechermoduls (MI) durchgeführten Spannungsmessung und von mindestens einer Impedanzcharakteristik des Stromkreises (CE) stromaufwärts des Unterbrechermoduls (MI) wählen.

6. Vorrichtung nach einem der vorhergehenden Ansprüche, **dadurch gekennzeichnet, dass** die Steuermittel (MC) so beschaffen sind,
dass sie die Stellungen der Hauptschalter (IP) auch in Abhängigkeit von mindestens einem Parameter steuern, der aus einer Gruppe ausgewählt ist, die einen minimalen Spannungssollwert an den Klemmen des Verbrauchernetzes (RA1), einen Stromzustand des Stromkreises (CE) und einen Betriebssollwert der Steuereinrichtung (DC) umfasst.

7. Vorrichtung nach einem der vorhergehenden Ansprüche, **dadurch gekennzeichnet, dass** die Steuermittel (MC) so angeordnet sind, dass sie die Anordnungen der Hauptschalter (IP) entweder im Wesentlichen synchron oder desynchron steuern.

8. Elektrische Schaltung (CE), die zur Ausrüstung eines Systems geeignet ist und einen Stromgenerator (GC) umfasst, der jeweils parallel mit einem ersten elektrischen Energiespeicher (SE1), mit einem Verbrauchsnetz (RA1), das mindestens eine elektrische Energie verbrauchende Vorrichtung (OCj) umfasst, und mit einem Wandler (CV) vom Typ DC/DC-Schalter verbunden ist, wobei der Wandler zwischen dem ersten elektrischen Energiespeicher (SE1) und dem Verbrauchsnetz (RA1) angeordnet ist und mit einer zweiten elektrischen Energiespeichereinrichtung (SE2) in Reihe geschaltet ist, **dadurch gekennzeichnet, dass** sie ferner eine Steuereinrichtung (DC) nach einem der vorhergehenden Ansprüche umfasst, die in Reihe zwischen einerseits den Stromgenerator (GC) und die erste elektrische Energiespeichereinrichtung (SE1) und andererseits den Umrichter (CV) und das Verbrauchernetz (RA1) geschaltet ist.

9. Fahrzeug, **dadurch gekennzeichnet, dass** es eine elektrische Schaltung (CE) nach dem vorhergehenden Anspruch umfasst.

## Claims

1. A control device (DC) for an electric circuit (CE) comprising a current generator (GC) connected in parallel respectively to a first electric energy store (SE1), to a consumption network (RA1), and to a converter (CV) of the DC/DC switching type, the converter being located between said first electric energy store (SE1) and said consumption network (RA1), and being connected in series to a second electric energy store (SE2), **characterized in that** it comprises :
i) an interruption module (MI) suitable for being connected in series between, on the one hand, the said current generator (GC) and the said first electrical energy store (SE1) and, on the other hand, the said converter (CV) and the said consumption network (RA1), and comprising at least two interruption means (Mlk) on the one hand, each comprising at least one main switch (IP) with at least three states, of which at least one intermediate state is partially conductive, and a diode (DI) connected in parallel, and, on the other hand, connected in series with the said diodes (DI) connected in opposite ways, and
ii) control means (MC) arranged to control the placement of at least one of said main switches (IP) in an intermediate state in a case where said converter (CV) is in a recharging mode of said second electrical energy storage device (SE2) and where a voltage measurement V2 at the terminals of said consumer network (RA1) is greater than a voltage limitation setpoint at the terminals of said consumer network (RA1), a control of the voltages of said main switches (IP) being determined as a function of a control of at least one power switch of the converter (CV)
and **in that** said control means (MC) are arranged, when each main switch (IP) has several intermediate states, to control the placements of at least one of said main switches (IP) in successive states as a function of a predefined law suitable for inducing a decrease in the voltage V2 across said consumption network (RA1) as long as said voltage measurement V2 across said consumption network (RA1) is greater than said voltage limitation setpoint across said consumption network (RA1).

2. Device according to claim 1, **characterized in that** said predefined law is non-linear.

3. Device according to one of the preceding claims, **characterized in that** said control means (MC) are arranged to start the control according to said predefined law with a first predefined time shift after the reception of a first voltage measurement at the terminals of said consumption network (RA1) higher than said voltage limitation setpoint at the terminals of said consumption network (RA1).

4. Device according to one of the preceding claims, **characterized in that** said control means (MC) are arranged to stop the control according to said predefined law with a second time shift depending on said voltage measurement across said consumption network (RA1).

5. Device according to the preceding claim, **characterized in that** said control means (MC) are arranged to choose said second time shift as a function of a switching frequency of said converter (CV), of a current consumed by said converter (CV) during said switching, of a voltage measurement carried out upstream of said interrupter module (MI), and of at least one impedance characteristic of said electric circuit (CE) upstream of said interrupter module (MI).

6. Device according to one of the preceding claims, **characterized in that** said control means (MC) are arranged to control the placements of said main switches (IP) according also to at least one parameter selected from a group comprising a minimum voltage setpoint across said consumer network (RA1), a current state of said electric circuit (CE), and an operating setpoint of said control device (DC).

7. Device according to any of the preceding claims, **characterised in that** said control means (MC) are arranged to control the placements of said main switches (IP) either substantially synchronously or desynchronously.

8. Electrical circuit (CE) suitable for equipping a system and comprising a current generator (GC) connected in parallel, respectively, to a first electrical energy store (SE1), to a consumption network (RA1), comprising at least one electrical energy consuming element (OCj), and to a converter (CV) of the DC/DC switching type, the converter being situated between said first electrical energy store (SE1) and said consumption network (RA1), and being connected in series to a second electrical energy store (SE2), **characterised in that** it further comprises a control device (DC) according to one of the preceding claims, connected in series between, on the one hand, said current generator (GC) and said first electrical energy store (SE1), and, on the other hand, said converter (CV) and said consumer network (RA1).

9. Vehicle, **characterized in that** it comprises an electric circuit (CE) according to the preceding claim.
